# EUROPÄISCHE PATENTSCHRIFT

(11) **EP 3 727 097 B1**
(45) Veröffentlichungstag und Bekanntmachung des Hinweises auf die Patenterteilung: **20.09.2023**
(21) Anmeldenummer: 18826733.0
(22) Anmeldetag: 21.12.2018
(51) Int. Cl.: A47C 20/04, A61G 7/018, H02P 7/00, H02P 7/03

(54) **ELEKTROMOTORISCHER MÖBELANTRIEB, MÖBEL UND VERFAHREN ZUM ERFASSEN EINER POSITION EINES ELEKTROMOTORISCHEN MÖBELANTRIEBS**
ELECTRIC MOTOR-DRIVEN FURNITURE DRIVE, FURNITURE, AND METHOD FOR DETECTING THE POSITION OF AN ELECTRIC MOTOR-DRIVEN FURNITURE DRIVE
DISPOSITIF D'ENTRAÎNEMENT POUR MEUBLE À MOTEUR ÉLECTRIQUE, MEUBLE ET PROCÉDÉ POUR DÉTECTER UNE POSITION D'UN DISPOSITIF D'ENTRAÎNEMENT POUR MEUBLE À MOTEUR ÉLECTRIQUE

(30) Priorität: 22.12.2017 DE 102017131226
(43) Veröffentlichungstag der Anmeldung: 28.10.2020
(73) Patentinhaber: DewertOkin Technology Group Co., Ltd., Jiaxing City, Zhejiang Province (CN)
(72) Erfinder: HILLE, Armin, 33659 Bielefeld (DE)
(74) Vertreter: Kleine, Hubertus
(86) Internationale Anmeldenummer: PCT/EP2018/086704
(87) Internationale Veröffentlichungsnummer: WO 2019/122382

(56) Entgegenhaltungen:
- EP-A2- 1 903 668
- WO-A2-2013/128035
- DE-A1-102009 036 274

## Beschreibung

Die Erfindung betrifft einen elektromotorischen Möbelantrieb mit mindestens einem Verstellantrieb zur elektromotorischen Bewegung wenigstens eines bewegbaren Möbelbauteils relativ zu einem weiteren Möbelbauteil und einer Steuereinrichtung zum Ansteuern eines Motors des Verstellantriebs über Halbleiter-Leistungsschalter. Die Erfindung betrifft weiterhin ein Verfahren zum Erfassen einer Position eines Verstellantriebs eines elektromotorischen Möbelantriebs und ein Möbel mit einem elektromotorischen Möbelantrieb.

Bei einem elektromotorischen Verstellantrieb wird zum Verstellen eines Möbelbauteils ein Motor des entsprechenden Verstellantriebs betrieben, wahlweise in einem Links- bzw. einem Rechtslauf. Häufig werden Relais in einer Polwender-Konfiguration in einer Steuereinrichtung bzw. Motorsteuerung des Möbelantriebs eingesetzt, um ausgehend von Signalen von kabelgebundenen und/oder drahtlosen Bedieneinheiten (auch Handbedienungen genannt) den Motor in die eine oder andere Drehrichtung zu schalten. Dieses ist mithilfe von Relais in einem einfachen elektrischen Aufbau möglich. Zudem schalten Relais verglichen mit z.B. Bipolartransistoren verlustfrei.

Mit inzwischen erhältlichen preisgünstigen, leistungsfähigen und ebenfalls nahezu verlustfrei schaltenden Halbleiter-Leistungsschaltern, wie zum Beispiel Mosfets (Metal-Oxide Semiconductor Field Effect Transistors) oder IG-BTs (Insulated Gate Bipolar Transistors), werden vermehrt auch halbleiterbasierte Polwendeschaltungen eingesetzt. In der Regel kommen sogenannte H-Brücken zum Einsatz, die zwei Brückenzweige mit je zwei in Reihe geschalteten Halbleiter-Leistungsschaltern aufweisen. Zwischen Mittelabgegriffen der Brückenzweige ist der Motor des Verstellantriebs geschaltet.

In der Regel unterstützen alle Möbelantriebe einen manuellen Betriebsmodus. In diesem manuellen Betriebsmodus sind auf der Bedieneinheit für jeden Verstellantrieb zwei Bedienelemente, beispielsweise Taster, vorgesehen, wobei ein Betätigen eines Bedienelements den Motor des Verstellantriebs in die eine oder andere Richtung drehen lässt.

Darüber hinaus sind häufig Betriebsarten vorhanden, die ein komfortables Anfahren bestimmter vorgegebener oder programmierbarer Positionen des Verstellantriebs mit einem einzelnen Tastendruck oder sonstigen Kommando ermöglichen. Neben einem Komfortgewinn kann dieses auch eine medizinische Anforderung an Möbelantriebe sein, um beispielsweise mit Möbelantrieben ausgestattete Hospitalbetten in vorgegebene Schutzpositionen wie eine Schocklage zu bewegen.

Um frei definierbare Positionen anfahren zu können, wird eine Positionserfassung des Verstellantriebs benötigt. Häufig wird eine relative Positionserfassung eingesetzt, bei der eine relative Bewegung des Verstellantriebs ausgehend von einer definierten Referenzposition nachgehalten wird. Die definierte Referenzposition kann beispielsweise mithilfe eines fest montierten (End-)Schalters, der bei einer bestimmten Position des Verstellantriebs betätigt wird, erfasst werden.

Eine relative Bewegung des Verstellantriebs lässt sich z.B. mithilfe von Drehsensoren erfassen, die am Motor angeordnet sind. Die Auswertung der Drehsensoren ist jedoch aufwendig und Sensoren und Auswerteschaltung verteuern den Aufbau eines Verstellantriebs.

Bei Motoren, die über Relais in einer Polwender-Konfiguration geschaltet werden, ist es zudem bekannt, den Motorstrom zu erfassen, beispielsweise über einen Hallsensor oder über einen Messwiderstand (Shunt). Gleichstrommotoren mit einem Kollektor, sogenannte Kollektormotoren, zeigen im gemessenen Stromverlauf charakteristische Flanken beim Kommutieren ihres Ankermagnetfelds durch den Kollektor. Eine Auswerteschaltung erfasst die Flanken und gibt bei jeder Flanke einen sogenannten Kommutationspuls aus. Die Kommutationspulse können gezählt werden, um die relative Position des Verstellantriebs zu ermitteln. Abhängig von einer Drehrichtung des Motors werden die Kommutationspulse aufaddiert oder subtrahiert, um eine absolute Position zu bestimmen.

Durch die Erfassung von Kommutationspulsen kann auf zusätzliche Drehsensoren verzichtet werden. Eine verlustfreie Erfassung des Motorstroms ist jedoch nur mithilfe eines Hallsensors möglich, der wiederum den Verstellantrieb verteuern würde. Bei Verwendung eines Shunts zur Strommessung sinkt dagegen die Energieeffizienz der Motorsteuerung durch die im Shunt in Wärme umgesetzte Verlustleistung. Die abgegebene Wärme ist zudem bei der Dimensionierung der Motorsteuerung zu berücksichtigen und muss abgeführt werden. Dieses verkompliziert den Aufbau der Motorsteuerung. Ein gängiger elektromotorischer Möbelantrieb ist beispielsweise aus der WO 2013/128035 A2 bekannt.

Der Erfindung liegt die Aufgabe zu Grunde, eine Steuereinrichtung, einen elektromotorischen Möbelantrieb sowie ein Möbel bereit zu stellen, die möglichst wartungsarm sind und die Möglichkeit bieten, auf kostengünstige Weise und energieeffizient eine Position mindestens eines der Verstellantriebe zu bestimmen. Es ist eine weitere Aufgabe, ein Betriebsverfahren für einen elektromotorischen Möbelantrieb zu schaffen, mit dem die Positionsbestimmung ermöglicht wird.

Diese Aufgabe wird durch einen elektromotorischen Möbelantrieb, ein Möbel und ein Verfahren mit den Merkmalen des jeweiligen unabhängigen Anspruchs gelöst. Vorteilhafte Ausgestaltungen sind Gegenstand der abhängigen Ansprüche.

Ein erfindungsgemäßer elektromotorischer Möbelantrieb der eingangs genannten Art zeichnet sich dadurch aus, dass die Steuereinrichtung zum Schalten eines Motorstroms des Motors zumindest einen Halbleiter-Leistungsschalter aufweist, wobei einer Auswerteeinheit eine über dem Halbleiter-Leistungsschalter abfallende Spannung zugeführt wird, um Kommutationsflanken des Motors zu detektieren.

Es wird somit der vorhandene Innenwiderstand des eingesetzten Halbleiter-Leistungsschalters, insbesondere eines Mosfets, erfindungsgemäß ausgenutzt, um einen Spannungsabfall als Maß für den Motorstrom zu generieren, der ausgewertet wird um das Kommutation des Motors zu erfassen. Da der Innenwiderstand inhärent im leitenden Zustand des Halbleiter-Leistungsschalters vorhanden ist, kann auf einen zusätzlichen Shunt verzichtet werden, wodurch kein zusätzlicher Spannungsabfall erzeugt wird. Es wird so ein möglichst energieeffizienter Betrieb des Verstellantriebs erzielt. Zudem wird keine zusätzliche Verlustleistung in Form von Wärme erzeugt, die abgeführt werden müsste. Der Einsatz von Mosfets ist zudem vorteilhaft, da sie durch die Motor-Kommutation hervorgerufene Spannungsspitzen ausgezeichnet dämpfen, wodurch elektronische Bauelemente der Schaltung gut geschützt sind.

Bei dem erfindungsgemäßen, elektromotorischen Möbelantrieb sind für jeden Motor, der in den Verstellantrieben eingesetzt wird, vier Halbleiter-Leistungsschalter in einer H-Brückenanordnung vorgesehen. Auf diese Weise wird eine Polwendeschaltung realisiert, um den Verstellantrieb in beide Richtungen verfahren zu können.

Weiterhin die Auswerteeinheit erfindungsgemäß mit mindestens einem Mittelabgriff eines Brückenzweigs der H-Brückenanordnung verbunden. Auf diese Weise kann das über einem der Leistungsschalter abfallende Spannungssignal erfasst werden, bevorzugt das über demjenigen der Leistungsschalter, der mit einem Anschluss auf einem Bezugspotential (Massepotential) liegt. Häufig wird dieser Schalter auch als der "low-side" Schalter eines Brückenzweigs bezeichnet, der andere der Schalter wird zur Unterscheidung "high-side" Schalter genannt. Auf diese Weise werden Kommutationsflanken bei Bewegung des Motors in eine Richtung detektiert. Bevorzugt wird dabei ein Flankendetektor in der Auswerteeinheit eingesetzt. Dieser kann in einer vorteilhaften Ausgestaltung mit einfachem Aufbau einen Operationsverstärker aufweisen, dessen Eingänge über Tiefpässe mit dem Mittelabgriff eines Brückenzweigs verbunden sind.

Um eine Motorbewegung in beide Richtungen zu erfassen, ist erfindungsgemäß jewelis ein Flankendetektor mit dem jeweiligen Mittelabgriff der beiden Brückenzweige gekoppelt werden.

Alternativ zu der Ausführung, bei der jeweils ein Flankendetektor mit dem jeweiligen Mittelabgriff der beiden Brückenzweige gekoppelt ist, ist erfindungsgemäß vorgesehen, mit nur einem Flankendetektor beide Betriebsrichtungen zu erfassen, indem eine Widerstandsbrücke, umfassend zwei Widerstände in Reihenschaltung, parallel zum Motor angeordnet ist. Die Auswerteeinheit mit dem Flankendetektor ist mit einem Mittelabgriff zwischen den Widerständen verbunden. Auf diese Weise wird der Spannungsabfall über jedem Schalter der H-Brücke der Auswerteeinheit zugeführt. Die Erfassung der Kommutation des Motors kann in beiden Betriebsrichtung des Motors mit einer Auswerteeinheit erfolgen. Bevorzugt unterscheiden sich dabei die "lowside" und die "high-side"-Mosfets im Hinblick auf ihren Durchgangswiderstand, um ein möglichst gutes Signal am Flankendetektor zu erhalten. Bei Verwendung unterschiedlicher Typen der Mosfets auf der positiven bzw. negativen Versorgungsspannungsseite, z.B. p- gegenüber n-Typen, ist das in der Regel von sich aus gegeben.

Der Flankendetektor weist erfindungsgemäß einen Operationsverstärker auf, dessen Eingänge über Tiefpässe mit dem Mittelabgriff zwischen den Widerständen verbunden sind.

Ein erfindungsgemäßes Möbel weist einen derartigen elektromotorischen Möbelantrieb auf.

Ein erfindungsgemäßes Verfahren ist geeignet zum Erfassen einer Position eines Verstellantriebs eines erfindungsgemäßen elektromotorischen Möbelantriebs mit mindestens einem Verstellantrieb zur elektromotorischen Bewegung wenigstens eines bewegbaren Möbelbauteils relativ zu einem weiteren Möbelbauteil. Dabei weist der elektromotorische Möbelantrieb eine Steuereinrichtung und eine Bedieneinheit auf, wobei ein Motor des mindestens einen Verstellantriebs in Abhängigkeit von Signalen der Bedieneinheit angesteuert wird, und wobei ein Motorstrom des Motors mittels zumindest eines Halbleiter-Leistungsschalters geschaltet wird. Es wird eine über dem Halbleiter-Leistungsschalter abfallende Spannung ausgewertet, um eine Kommutation des Motors zu detektieren.

Es ergeben sich für das Möbel und das Verfahren die im Zusammenhang mit dem elektromotorischen Möbelantrieb zuvor genannten Vorteile.

Erfindungsgemäß detektiert eine Auswerteeinheit Flanken des Motorstroms. Bevorzugt gibt die Auswerteeinheit bei einem Erfassen einer Flanke einen Puls an einem Ausgang aus. Bevorzugt werden die Pulse an dem Ausgang gezählt, um eine Veränderung einer Position des mindestens einen Verstellantriebs zu ermitteln. Auf diese Weise dient die Erfassung der Kommutation einer relativen Bestimmung der Position des Verstellantriebs. Ausgehend von einer Referenzposition kann anhand der ermittelten relativen Positionsbestimmung eine absolute Position des Verstellantriebs bestimmt werden.

Die Erfindung wird nachfolgend anhand von Ausführungsbeispielen mithilfe von Figuren erläutert.

Die Figuren zeigen:
- Fig. 1: eine schematische Perspektivansicht einer beispielhaften Möbelanordnung;
- Fig. 2: eine schematische Darstellung eines elektromotorischen Möbelantriebs mit Verstellantrieben und einer drahtlosen Fernbedienung;
- Fig. 3: ein schematisches Schaltbild eines Ausführungsbeispiels einer Motoransteuerung einer Steuereinrichtung eines Möbelantriebs; und
- Fig. 4: ein schematisches Schaltbild eines weiteren Ausführungsbeispiels einer Motoransteuerung einer Steuereinrichtung eines Möbelantriebs.

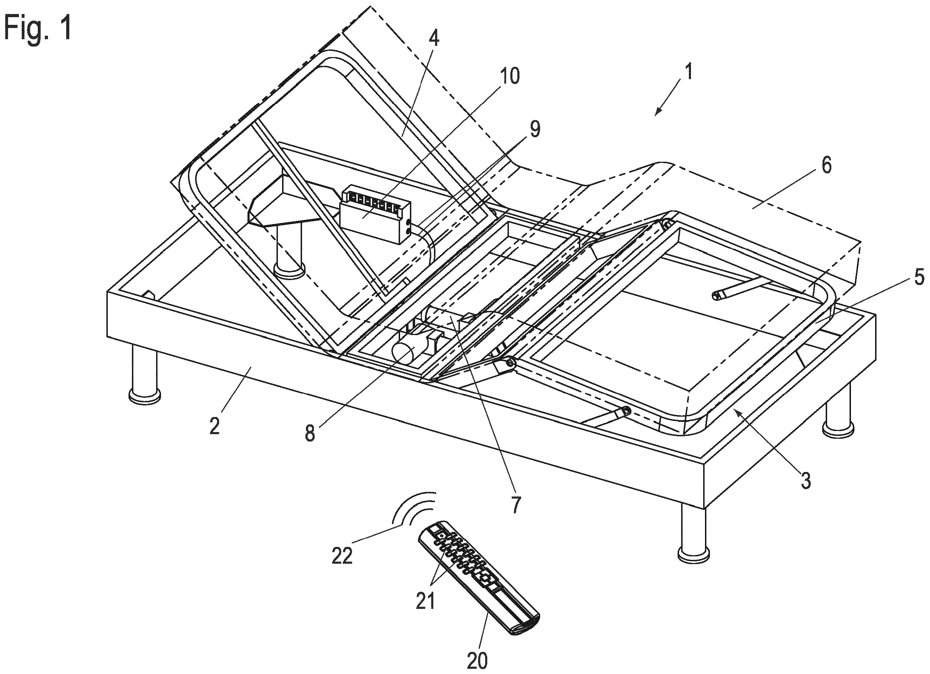

Fig. 1 zeigt eine Möbelanordnung mit einem Möbel 1. Als Möbel 1 ist hier beispielhaft ein Bett dargestellt. Das Möbel 1 weist wenigstens ein Stützelement 3 zur Aufnahme einer Polsterung, z.B. einer Matratze 6, auf. Das Stützelement 3 ist z.B. als ein Lattenrost, als ebene Stützfläche oder dergleichen ausgebildet und an einem Grundelement 2 befestigt. Im dargestellten Beispiel ist das Grundgestell ein rahmenartiges Gestell mit Füßen, mit dem das Möbel 1 an einem Aufstellort, z.B. Fußboden, aufgestellt ist.

Das Stützelement 3 weist im dargestellten Beispiel ein Rückenteil 4 und ein Beinteil 5 auf, welche relativ zu einem weiteren Stützelement oder relativ zu dem Grundelement 2 bewegbar gelagert angeordnet sind. Diese bewegbare Anordnung ist hier mittels eines so genannten Bewegungsbeschlags realisiert. Die Bewegung ist verschiebbar und/oder schwenkbar ausgebildet.

Das bewegbar gelagerte Rückenteil 4 und das Beinteil 5 sind jeweils mit einem elektromotorischen Verstellantrieb 7, 8 gekoppelt. So ist das Rückenteil 4 mit dem elektromotorischen Verstellantrieb 7 gekoppelt. Zur Bewegung bzw. Verstellung des Beinteils 5 ist der elektromotorische Verstellantrieb 8 vorgesehen.

Die elektromotorischen Verstellantriebe 7, 8 sind vorliegend als Linearantriebe ausgebildet. Die Linearantriebe weisen einen oder eine Anzahl Elektromotoren auf, wobei jedem Motor ein Drehzahlreduziergetriebe mit wenigstens einer Getriebestufe nachgeschaltet ist. Dem Drehzahlreduziergetriebe kann ein weiteres Getriebe, beispielsweise in Form eines Gewindespindelgetriebes, nachgeschaltet sein, welches aus der Drehbewegung des Motors eine Linearbewegung eines Abtriebsgliedes erzeugt. Das letzte Getriebeglied oder ein damit verbundenes weiteres Glied bildet das Abtriebsglied. Das Abtriebsglied des jeweiligen elektromotorischen Verstellantriebs steht mit dem jeweiligen Möbelbauteil (Rückenteil 4, Beinteil 5) oder alternativ mit einem mit dem Grundelement 2 verbundenes Bauteil in Verbindung, so dass bei einem Betrieb des Elektromotors des jeweiligen Verstellantriebs 7, 8 die bewegbaren Möbelbauteile 4, 5 relativ zueinander bzw. relativ zum Grundelement 2 verstellt werden.

Die elektromotorischen Verstellantriebe 7, 8 sind über Kabel 9 mit einer Steuereinrichtung 10, auch Motorsteuerung genannt, verbunden. Diese Verbindung kann z.B. als steckbare Kabelverbindung ausgeführt sein, was hier nicht näher dargestellt ist. Die Steuereinrichtung 10 weist eine elektrische Versorgungseinheit auf, welche die elektrische Energie, z.B. aus dem Netz, für die elektromotorischen Verstellantriebe 7, 8 bereitstellt. Dazu ist die Steuereinrichtung 10 über ein in diesem Beispiel nicht gezeigtes Netzkabel mit einem Netzstecker mit einem Netzanschluss verbindbar. Der Netzstecker leitet über das Netzkabel die eingangsseitige Netzspannung zu der elektrischen Versorgungseinheit der Steuereinrichtung 10, welche sekundärseitig eine Kleinspannung in Form einer Gleichspannung abgibt und diese zu einer Steuereinrichtung 10 weiterleitet.

Alternativ hierzu ist der Steuereinrichtung 10 eine nicht näher dargestellte netzabhängige Spannungsversorgung mit Netzeingang und mit sekundärseitigem Kleinspannungsausgang vorgeschaltet, welche über die Leitung die Kleinspannung in Form einer Gleichspannung zuführt.

Zur Bedienung des Möbelantriebs ist eine Bedieneinheit 20, auch Handbedienung genannt, vorgesehen, die Bedienelemente 21 aufweist, mittels derer die elektromechanischen Verstellantriebe 7, 8 über die Steuereinrichtung 10 steuerbar sind.

Die Bedienelemente 21 können beispielsweise als Taster und/oder Schalter ausgebildet sein. Ferner kann die Bedieneinheit 20 mit einem Meldeelement, z.B. einer Leuchtiode oder einer Anzeigeeinheit, ausgerüstet. Das Meldeelement dient z.B. zur Funktionsanzeige bzw. Rückmeldung, Fehleranzeige usw..

In dem gezeigten Beispiel ist die Bedieneinheit 20 als Fernbedienung ausgebildet, die drahtlose Signale 22 aussendet. Sie weist dazu zumindest einen Sender, ggf. aber auch einen Empfänger für die drahtlose Signale 21 auf.

Als Bedieneinheit 20 kann eine eigens konzipiertes (Hand-) Gerät eingesetzt werden. Es ist jedoch insbesondere auch möglich, ein universelles Mobilgerät, wie z.B. ein Smartphone oder einen Tablett-Computer, mit entsprechender Software ("App") als Bedieneinheit 20 einzusetzen.

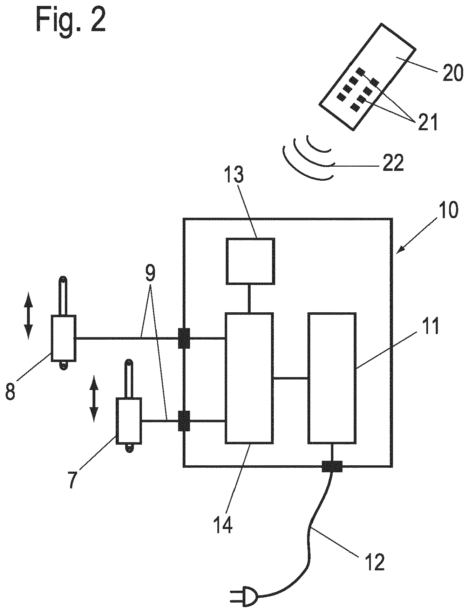

Fig. 2 zeigt in Form eines schematischen Blockschaltbilds den Aufbau des Möbelantriebs des Ausführungsbeispiels der Fig. 1 und insbesondere der Steuereinrichtung 10 detaillierter.

Die Steuereinrichtung 10 umfasst ein Netzteil 11, das über ein Netzkabel 12 mit Netzstrom versorgt wird. In alternativen Ausgestaltungen kann das Netzteil 11 extern von der Steuereinrichtung 10 angeordnet sein und mit dieser über eine Niederspannung Leitung verbunden sein. Die Steuereinrichtung 10 umfasst weiter eine der Empfangseinheit 13, die zum Empfang der in diesem Ausführungsbeispielen drahtlosen Signale 22 der Bedieneinheit 20 eingerichtet ist. Eine Betätigung der Bedienelemente 21 der Bedieneinheit 20, hier beispielhaft verschiedene Tasten, wird über die Empfangseinheit 13 an eine Motoransteuerung 14 übertragen, die die empfangenen Signale in Motorströme umsetzt, mit denen die Motoren der Verstellantrieben 7, 8 angetrieben werden.

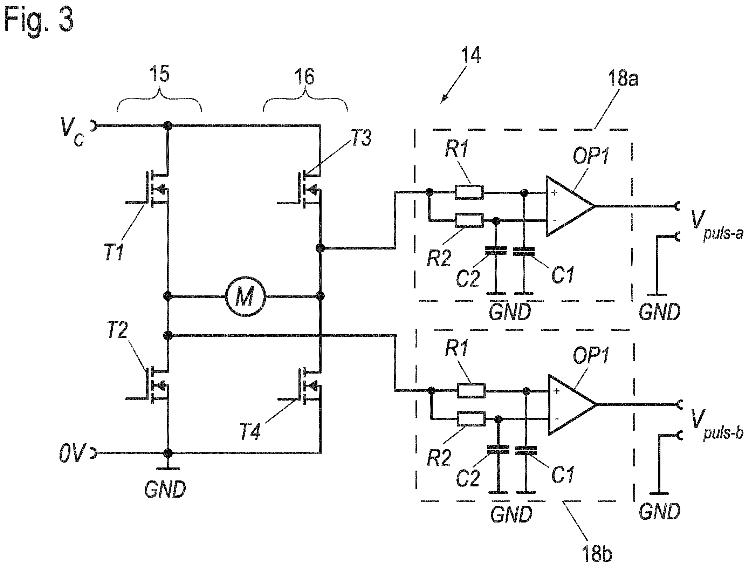

Fig. 3 zeigt einen Teil der Motoransteuerung 14 in einem schematischen Schaltbild für ein erstes Ausführungsbeispiel detaillierter. Dargestellt ist die Ansteuerung eines Motors M eines der Verstellantriebe 7, 8. Der Motor M ist zwischen Mittelangriffen zweier Brückenzweige 15, 16 geschaltet, die zusammen eine H-Brücke bilden.

Jeder Brückenzweig 15, 16 umfasst eine Reihenschaltung zweier Halbleiter-Schaltelemente, vorliegend Mosfets T1, T2 bzw. T3, T4. Versorgt werden die beiden Brückenzweige 15, 16 über eine Versorgungsspannung Vc, die das Netzteil 13 bereitstellt. Die Versorgungsspannung Vc ist eine gegenüber einem Massepotential GND, das einer Spannung von 0 Volt (V) entspricht, positive Gleichspannung.

Eine Ansteuerelektronik für die Halbleiter-Schaltelemente ist aus Gründen der Übersichtlichkeit nicht dargestellt. In Abhängigkeit der von der Empfangseinheit 13 ausgegebenen Signale werden entweder die Mosfets T1 und T4 oder T2 und T3 so angesteuert, dass sie leitend werden. Im Ruhezustand des Verstellantriebs ist dagegen vorgesehen, entweder die Mosfets T2 und T4 (low-side) oder die Mosfet T1 und T3 (high-side) anzusteuern, um eine Motorbremse zu realisieren (auch EMK-Bremse genannt).

Der Motor M ist ein Gleichstrommotor mit Kollektor, dessen Kommunikation erfasst wird, um eine relative Positionserfassung des zugehörigen Verstellantriebs zu ermöglichen.

Zu diesem Zweck ist die H-Brückenschaltung mit einer Auswerteschaltung verbunden, die zwei Flankendetektoren 18a, 18b aufweist. Jeder der Flankendetektoren 18a, 18b ist mit einem Eingang an dem jeweiligen Mittelabgriff der beiden Brückenzweige 15, 16 angeschlossen.

Die Flankendetektoren 18a, 18b sind identisch aufgebaut und weisen jeweils einen Operationsverstärker OP1 auf, dessen Eingänge jeweils über ein Tiefpass mit dem Mittelabgriff der Brückenzweige 15, 16 verbunden sind. Die beiden Tiefpässe umfassen die Widerstände R1 bzw. R2 und die zugeordneten Kondensatoren C1 bzw. C2. Dabei unterscheiden sich die Widerstände R1 und R2 und/oder die Kondensatoren C1 und C2 in ihren Werten, so dass die beiden Tiefpässe unterschiedliche Zeitkonstanten aufweisen.

Eine Kommunikationsflanke am Eingang des jeweiligen Flankendetektors 18a, 18b wird dadurch in einen Puls am Ausgang des Operationsverstärker OP1 umgesetzt. Der Ausgang des Operationsverstärkers OP1 stellt auch einen Ausgang Vpuls-a bzw. Vpuls-b für Kommutationspulse des jeweiligen Flankendetektors 18a, 18b dar. Je nach Betriebsrichtung des Motors M ist der eine oder der andere der beiden low-side Transistoren T2 oder T4 durchgeschaltet und entsprechend ist der eine oder der andere Flankendetektor 18a, 18b aktiv.

Die Pulse können gezählt werden, um ein Kommutieren des Motors M und damit seine Drehung zu erfassen und die relative Position des zugeordneten Verstellantriebs nachzuhalten. Das Zählen der Pulse ist in der Fig. 3 nicht näher dargestellt. Es erfolgt bevorzugt derart, dass eine erfasste Position in einem nicht-flüchtigen Speicher hinterlegt wird, so dass der korrekte Positionswert unabhängig von einer permanenten Stromversorgung erhalten bleibt. Während der Drehung des Motors M kann z.B. ein Vergleich mit möglichen gespeicherten Positionen vorgenommen werden, um eine gespeicherte Position gezielt anfahren zu können.

Die so realisierte relative Positionserfassung ist bevorzugt mit einer absoluten Positionserfassung zumindest einer Referenzposition gekoppelt. Diese kann beispielsweise über einen entlang des Verfahrwegs des Verstellantriebs angeordneten (End-) Schalter erfasst werden.

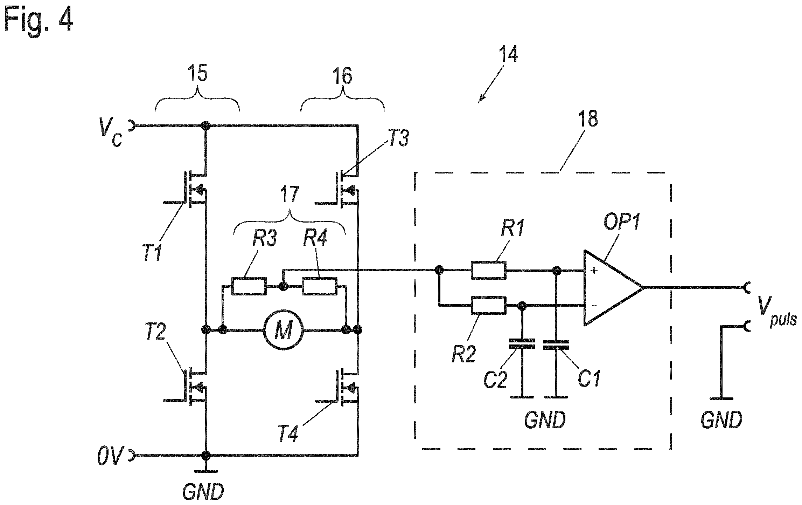

Fig. 4 zeigt in gleicher Weise wie Fig. 3 einen Teil der Motoransteuerung 14 in einem weiteren Ausführungsbeispiel. Gleiche Bezugszeichen kennzeichnen gleiche oder gleichwirkende Elemente wie in den zuvor gezeigten Figuren. Im Grundaufbau entspricht das Ausführungsbeispiel der Fig. 4 dem der Fig. 3, auf deren Beschreibung hiermit verwiesen wird.

Im Unterschied zum Beispiel der Fig. 3 weist vorliegend die Auswerteschaltung nur einen Flankendetektor 18 auf. Parallel zum Motor M ist eine Widerstandsbrücke 17 angeordnet, die zwei Widerstände R3, R4 in Serienschaltung aufweist. Ein Mittelabgriff der Widerstandsbrücke 17 ist mit dem Flankendetektor 18 gekoppelt. Der Flankendetektor 18 weist wiederum einen Operationsverstärker OP1 auf, dessen Eingänge jeweils über ein Tiefpass mit dem Mittelabgriff der Widerstandsbrücke 17 verbunden sind. Eine Kommunikationsflanke am Eingang des Flankendetektors 18 wird wie beim Beispiel der Fig. 3 in einen Puls am Ausgang des Operationsverstärker OP1 umgesetzt, hier jedoch unabhängig davon, welcher der low-side Transistoren T2 oder T4 durchgeschaltet ist. Für jede der beiden Drehrichtungen des Motors M werden somit am Ausgang des Operationsverstärkers OP1, der auch einen Ausgang Vpuls für Kommutationspulse des Flankendetektors 18 darstellt, Pulse ausgegeben. Wie im Zusammenhang mit Fig. 3 beschrieben ist, können die Pulse gezählt werden, um ein Kommutieren des Motors M und damit seine Drehung zu erfassen und die relative Position des zugeordneten Verstellantriebs nachzuhalten.

Bei den in den Fig. 3 und 4 dargestellten Aufbauten wird ein zum Motorstrom proportionales Spannungssignal, das der Flankendetektor 18, 18a, 18b ausgewertet, als Spannungsabfall an dem Innenwiderstand eines der Mosfets T2 oder T4 generiert. Es wird ausgenutzt, dass ein Mosfet im durchgeschalteten (leitenden) Zustand einen Innenwiderstand im Bereich von einigen 10 oder 100 Milliohm aufweist, der inhärent vorhanden ist. Dieser Innenwiderstand wird anmeldungsgemäß ausgenutzt, um einen Spannungsabfall als Maß für den Motorstrom zu generieren, der ausgewertet wird um das Kommutation des Motors zu erfassen.

Da der Innenwiderstand der Mosfets inhärent im leitenden Zustand des Transistors vorhanden ist, kann auf einen zusätzlichen Shunt verzichtet werden, wodurch kein zusätzlicher Spannungsabfall erzeugt wird. Es wird so ein möglichst energieeffizienter Betrieb des Verstellantriebs erzielt. Zudem wird keine zusätzliche Verlustleistung in Form von Wärme erzeugt, die abgeführt werden müsste.

Beim der Schaltung gemäß Fig. 4 wird durch die Widerstandsbrücke 17 erreicht, dass der Motorstrom in jeder Betriebsrichtung des Motors M gemessen werden kann, dass also sowohl der Mosfet T2, als auch der Mosfet T4 mit seinem Innenwiderstand einen Messwiderstand bildet. Bevorzugt unterscheiden sich dabei die "low-side" und die "high-side"-Mosfets im Hinblick auf ihren Durchgangswiderstand, um ein möglichst gutes Signal am Flankendetektor 18 zu erhalten. Bei Verwendung unterschiedlicher Typen der Mosfets auf der positiven bzw. negativen Versorgungsspannungsseite, z.B. p- gegenüber n-Typen, ist das in der Regel von sich aus gegeben.

### Bezugszeichenliste

- 1: Möbel
- 2: Grundelement
- 3: Stützelement
- 4: Rückenteil
- 5: Beinteil
- 6: Matratze
- 7, 8: Verstellantrieb
- 9: Kabel

- 10: Steuereinrichtung
- 11: Netzteil
- 12: Netzkabel
- 13: Empfangseinheit
- 14: Motoransteuerung
- 15, 16: Brückenzweig
- 17: Widerstandsbrücke
- 18, 18a, b: Flankendetektor

- 20: Bedieneinheit
- 21: Bedienelement
- 22: drahtloses Signal

- T1-T4: Mosfet
- OP: Operationsverstärker
- R1-R4: Widerstand
- C1, C2: Kondensator
- M: Motor

- Vc: Versorgungsspannung
- GND, 0V: Masseanschluss
- Vpuls: Ausgang für Pulse

## Patentansprüche

1. Elektromotorischer Möbelantrieb mit mindestens einem Verstellantrieb (7, 8) zur elektromotorischen Bewegung wenigstens eines bewegbaren Möbelbauteils relativ zu einem weiteren Möbelbauteil, einer Steuereinrichtung (10) und einer Bedieneinheit (20), wobei ein Motor (M) des mindestens einen Verstellantriebs (7, 8) in Abhängigkeit von Signalen der Bedieneinheit (20) angesteuert wird, wobei die Steuereinrichtung (10) zum Schalten eines Motorstroms des Motors (M) zumindest einen Halbleiter-Leistungsschalter aufweist, wobei einer Auswerteeinheit eine über dem Halbleiter-Leistungsschalter abfallende Spannung zugeführt wird, um Kommutationsflanken des Motors (M) zu detektieren, wobei der zumindest eine Halbleiter-Leistungsschalter ein Mosfet (T1-T4) ist und wobei für jeden Motor (M) vier Halbleiter-Leistungsschalter in einer H-Brückenanordnung vorgesehen sind, **dadurch gekennzeichnet, dass** eine Widerstandsbrücke (17), umfassend zwei Widerstände (R3, R4) in Reihenschaltung, parallel zum Motor (M) angeordnet ist, wobei die Auswerteeinheit mit einem Mittelabgriff zwischen den Widerständen (R3, R4) verbunden ist und mindestens einen Flankendetektor (18, 18a, 18b) umfasst, der einen Operationsverstärker (OP1) aufweist, dessen Eingänge über Tiefpässe mit dem Mittelabgriff zwischen den Widerständen (R3, R4) verbunden sind.

2. Elektromotorischer Möbelantrieb mit mindestens einem Verstellantrieb (7, 8) zur elektromotorischen Bewegung wenigstens eines bewegbaren Möbelbauteils relativ zu einem weiteren Möbelbauteil, einer Steuereinrichtung (10) und einer Bedieneinheit (20), wobei ein Motor (M) des mindestens einen Verstellantriebs (7, 8) in Abhängigkeit von Signalen der Bedieneinheit (20) angesteuert wird, wobei die Steuereinrichtung (10) zum Schalten eines Motorstrom des Motors (M) zumindest einen Halbleiter-Leistungsschalter aufweist, wobei einer Auswerteeinheit eine über dem Halbleiter-Leistungsschalter abfallende Spannung zugeführt wird, um Kommutationsflanken des Motors (M) zu detektieren, wobei der zumindest eine Halbleiter-Leistungsschalter ein Mosfet (T1-T4) ist und wobei für jeden Motor (M) vier Halbleiter-Leistungsschalter in einer H-Brückenanordnung vorgesehen sind, **dadurch gekennzeichnet, dass** die Auswerteeinheit zwei Flankendetektoren (18a, 18b) umfasst, von denen jeweils einer mit einem der Mittelabgriffe der Brückenzweige der H-Brückenanordnung verbunden ist, wobei jeder Flankendetektor (18a, 18b) einen Operationsverstärker (OP1) aufweist, dessen Eingänge über Tiefpässe mit dem Mittelabgriff des Brückenzweigs verbunden sind.

3. Verfahren zum Erfassen einer Position eines Verstellantriebs eines elektromotorischen Möbelantriebs gemäß Anspruch 1 oder 2 mit mindestens einem Verstellantrieb (7, 8) zur elektromotorischen Bewegung wenigstens eines bewegbaren Möbelbauteils relativ zu einem weiteren Möbelbauteil, einer Steuereinrichtung (10) und einer Bedieneinheit (20), wobei ein Motor (M) des mindestens einen Verstellantriebs (7, 8) in Abhängigkeit von Signalen der Bedieneinheit (20) angesteuert wird, wobei ein Motorstrom des Motors (M) mittels zumindest eines Halbleiter-Leistungsschalters geschatet wird und wobei eine über dem Halbleiter-Leistungsschalter abfallende Spannung ausgewertet wird, um eine Kommutation des Motors (M) zu detektieren.

4. Verfahren nach Anspruch 3, bei dem eine Auswerteeinheit Flanken des Motorstroms detektiert und bei einem Erfassen einer Flanke einen Puls an einem Ausgang (Vpuls, Vpuls-a, Vpuls-b) ausgibt.

5. Verfahren nach Anspruch 4, bei dem Pulse an dem Ausgang (Vpuls, Vpuls-a, Vpuls-b) gezählt werden, um eine Veränderung einer Position des mindestens einen Verstellantriebs (7, 8) zu ermitteln.

6. Verfahren nach Anspruch 5, bei dem ausgehend von einer Referenzposition anhand der ermittelten Veränderung der Position eine absolute Position des Verstellantriebs (7, 8) bestimmt wird.

7. Möbel (1), aufweisend einen elektromotorischen Möbelantrieb gemäß Anspruch 1 oder 2.

## Claims

1. Electromotive furniture drive comprising at least one adjustment drive (7, 8) for the electromotive movement of at least one movable furniture component relative to a further furniture component, a control device (10) and an operating unit (20), wherein a motor (M) of the at least one adjustment drive (7, 8) is actuated as a function of signals from the operating unit (20), wherein the control device (10) comprises at least one semiconductor power switch for switching a motor current of the motor (M), wherein a voltage dropping across the semiconductor power switch is supplied to an evaluation unit in order to detect commutation edges of the motor (M),wherein the at least one semiconductor power switch is a MOSFET (T1-T4), and wherein four semiconductor power switches are provided in an H-bridge arrangement for each motor (M), **characterized in that**
a resistance bridge (17) comprising two resistors (R3, R4) in series connection, is arranged in parallel with the motor (M), wherein the evaluation unit is connected to a center tap between the resistors (R3, R4) and comprises at least one edge detector (18a, 18b) which comprises an operational amplifier (OP1) whose inputs are connected via low pass filters to the center tap between the resistors (R3, R4).

2. Electromotive furniture drive comprising at least one adjustment drive (7, 8) for the electromotive movement of at least one movable furniture component relative to a further furniture component, a control device (10) and an operating unit (20), wherein a motor (M) of the at least one adjustment drive (7, 8) is actuated as a function of signals from the operating unit (20), wherein the control device (10) comprises at least one semiconductor power switch for switching a motor current of the motor (M), wherein a voltage dropping across the semiconductor power switch is supplied to an evaluation unit in order to detect commutation edges of the motor (M),wherein the at least one semiconductor power switch is a MOSFET (T1-T4), and wherein four semiconductor power switches are provided in an H-bridge arrangement for each motor (M), **characterized in that**
the evaluation unit comprises two edge detectors (18a, 18b), one of which is connected in each case to one of the central taps of the bridge branches of the H-bridge arrangement wherein each edge detector (18a, 18b) has an operational amplifier (OP1) whose inputs are connected via low pass filters to the center tap of the bridge branch.

3. Method for detecting a position of an adjustment drive of an electromotive furniture drive according to claims 1 or 2, comprising at least one adjustment drive (7, 8) for the electromotive movement of at least one movable furniture component relative to a further furniture component, a control device (10) and an operating unit (20), wherein a motor (M) of the at least one adjustment drive (7, 8) is actuated as a function of signals from the operating unit (20), wherein a motor current of the motor (M) is switched by means of at least one semiconductor power switch, and wherein a voltage dropping across the semiconductor power switch is evaluated in order to detect a commutation of the motor (M).

4. Method according to claim 3, in which an evaluation unit detects edges of the motor current, and, when an edge is detected, outputs a pulse at an output (Vpuls, Vpuls-a, Vpuls-b).

5. Method according to claim 4, in which pulses are counted at the output (Vpuls, Vpuls-a, Vpuls-b) to determine a change in a position of the at least one adjustment drive (7, 8).

6. Method according to claim 5, in which, starting from a reference position, an absolute position of the adjustment drive (7, 8) is determined on the basis of the determined change in position.

7. Furniture (1), comprising an electromotive furniture drive according to claim 1 or 2.

## Revendications

1. Entraînement de meuble à moteur électrique avec au moins un entraînement de déplacement (7, 8) pour le déplacement par un moteur électrique d'au moins une partie de meuble mobile par rapport à une autre partie de meuble, avec une installation de commande (10) et avec une unité de commande (20), dans lequel un moteur (M) de l'au moins un entraînement de déplacement (7, 8) est activé en fonction de signaux de l'unité de commande (20), dans lequel l'installation de commande (10) comprend au moins un circuit de puissance à semi-conducteurs pour commuter un courant de moteur du moteur (M), dans lequel une tension qui baisse à travers le circuit de puissance à semi-conducteurs est amenée à une unité d'analyse pour détecter des flancs de commutation du moteur (M), dans lequel l'au moins un circuit de puissance à semi-conducteurs est un MOSFET (T1-T4) et dans lequel quatre circuits de puissance à semi-conducteurs sont prévus pour chaque moteur (M) dans une disposition de pont en H, **caractérisé en ce qu'**un pont de résistances (17) comprenant deux résistances (R3, R4) montées en série est disposé parallèlement au moteur (M), l'unité d'analyse étant reliée à une prise centrale entre les résistances (R3, R4) et comprenant au moins un détecteur de flancs (18, 18a, 18b) qui comporte un amplificateur opérationnel (OP1) dont les entrées sont reliées via des passe-bas à la prise centrale entre les résistances (R3, R4).

2. Entraînement de meuble à moteur électrique avec au moins un entraînement de déplacement (7, 8) pour le déplacement par un moteur électrique d'au moins une partie de meuble mobile par rapport à une autre partie de meuble, avec une installation de commande (10) et avec une unité de commande (20), dans lequel un moteur (M) de l'au moins un entraînement de déplacement (7, 8) est activé en fonction de signaux de l'unité de commande (20), dans lequel l'installation de commande (10) comprend au moins un circuit de puissance à semi-conducteurs pour commuter un courant de moteur du moteur (M), dans lequel une tension qui baisse à travers le circuit de puissance à semi-conducteurs est amenée à une unité d'analyse pour détecter des flancs de commutation du moteur (M), dans lequel l'au moins un circuit de puissance à semi-conducteurs est un MOSFET (T1-T4) et dans lequel quatre circuits de puissance à semi-conducteurs sont prévus pour chaque moteur dans une disposition de pont en H, **caractérisé en ce que** l'unité d'analyse comprend deux détecteurs de flancs (18a, 18b) dont l'un est relié à l'une des prises centrales des branches de pont de la disposition de pont en H, chaque détecteur de flancs (18a, 18b) comportant un amplificateur opérationnel (OP1) dont les entrées sont reliées via des passe-bas à la prise centrale de la branche de pont.

3. Procédé pour détecter une position d'une entraînement de déplacement d'un entraînement de meuble à moteur électrique selon la revendication 1 ou 2 avec au moins un entraînement de déplacement (7, 8) pour le déplacement par un moteur électrique d'au moins une partie de meuble mobile par rapport à une autre partie de meuble, avec une installation de commande (10) et avec une unité de commande (20), dans lequel un moteur (M) de l'au moins un entraînement de déplacement (7, 8) est activé en fonction de signaux de l'unité de commande, dans lequel un courant du moteur (M) est commuté au moyen d'au moins un commutateur de puissance à semi-conducteurs et dans lequel une tension qui baisse à travers le commutateur de puissance à semi-conducteurs est analysée afin de détecter une commutation du moteur (M).

4. Procédé selon la revendication 3, dans lequel une unité d'analyse détecte des flancs du courant du moteur et émet une impulsion sur une sortie (Vpuls, Vpuls-a, Vpuls-b) quand elle détecte un flanc.

5. Procédé selon la revendication 4, dans lequel des impulsions sur la sortie (Vpuls, Vpuls-a, Vpuls-b) sont comptées afin de déterminer un changement de position de l'au moins un entraînement de déplacement (7, 8).

6. Procédé selon la revendication 5 dans lequel, à partir d'une position de référence, une position absolue de l'entraînement de déplacement (7, 8) est déterminée à l'aide du changement de position détecté.

7. Meuble (1) comprenant un entraînement de meuble à moteur électrique selon la revendication 1 ou 2.
